# EUROPEAN PATENT APPLICATION

(11) **EP 1 253 114 A2**
(43) Date of publication of application: **30.10.2002**
(21) Application number: 02252932.5
(22) Date of filing: 25.04.2002
(51) Int. Cl.: C02F 1/00, B01D 24/10

(54) **Water conditioning system with replaceable cartridge**

(30) Priority: 26.04.2001 GB 0110227
(71) Applicant: Magi-cal Water Filters Limited, Blackheath, Birmingham B65 0AH (GB)
(72) Inventor: Fredericks, Stuart Markham, Blackheath, Birmingham B65 0AH (GB)
(74) Representative: Peel, James Peter

(57) **Abstract**

The invention provides a water conditioning system (100) for use in the food and/or beverage industry which system comprises
(a) a receptacle (1) for a conditioning media cartridge (23);
(b) a removable conditioning media cartridge (23);
wherein the receptacle (1) is provided with an inlet (2) and an outlet (3) such that it can be connected to a water supply. The cartridge is easily removable and may be replaced by a customer. A sensor indicates that the cartridge is in or out of place.

## Description

The present invention provides a water conditioning system using replaceable cartridges for use in the food and beverage industry and water conditioning cartridges for use in the system.

At the present time, cartridges for use in the treatment of water for cooking are limited to units in the form of rigid vessels (to withstand the pressure difference between the water pressure and atmospheric pressure) having a capacity of 5 litres. These are generally used only for the production of very small quantities of water and do not produce sufficient water economically for commercial operations. For this reason cartridge filters are rarely used, except as single units in some beverage machines.

With these systems there is no means of knowing when the cartridge needs to be replaced other than by carrying out a water analysis. In some instances, where ion exchange resins are used, the resin can indicate exhaustion by a colour change, but this requires the use of expensive resins and a transparent cartridge housing and colour change resins are not available for the production of food grade water.

In a water conditioning system, the water is chemically treated by being passed through a conditioning media such as activated carbon or a dealkalising resin. The treatment takes place by the water contacting the media for a sufficient period of time known as the contact time. This treatment does not remove suspended solids.

A water filter works by applying pressure on the water upstream of the filter so that it passes through the filter and suspended solids are removed. In practice, for this to work, the filter is housed in a pressure vessel which is capable of withstanding the pressure differential between the water pressure upstream of the filter and downstream of the filter and/or atmospheric pressure. With a water conditioning system, however, the conditioning process cannot be forced by applying more pressure. Indeed such an approach is potentially counter-productive because water passing through the system under pressure may not be properly treated. Therefore there is no incentive for a skilled person to house a water conditioning cartridge in a pressure vessel.

A further difference between a water conditioning system and a water filtration system is that a filter gradually becomes blocked as it is used so the end of its useful life may easily be detected because water will not flow through it. The end of life for a conditioning media can only be determined chemically by carrying out a comparative analysis of water before and after it has been treated. However, it can be estimated if the volume of water flowing through the device is measured accurately.

For the production of treated water for cooking in commercial quantities, the water conditioning systems generally used are those manufactured by Brita who have approximately 80% of the UK market.

These systems consist of an integral unit in the form of a fibreglass vessel on which there is mounted a plastic head incorporating a non-return valve, air vent drain etc. Inside the vessel there is a riser tube to collect the water which flows through the water conditioning media. The unit incorporates a totalising water meter to measure the quantity of water. This type of water meter cannot be reset.

The disadvantage with this type of arrangement is that in order to know when the conditioning medium needs to be changed, the water meter needs to be read on a regular basis and the starting meter reading subtracted from the present meter reading.

The present normal procedure for determining when a medium is exhausted is for the customer to take water meter readings at intervals prompted by Brita.

In order to change the medium, it is necessary to return the whole unit including the head and riser tube to the manufacturer. Alternatively, the exchange is done on site by the manufacturer's service engineers. The manufacturer's service engineers removes the existing vessel and media for recycling and fits an exchange vessel containing new or recycled media. The problem with this is that it is time consuming and inconvenient for both the customer and the manufacturer. For example where the system is used to treat water being used for steam ovens, the service engineer's visit may coincide with when the ovens are being used to cook food.

The known system does have some advantages in that the ion exchange resin part of the filter medium returned in the vessel can be regenerated and reused, thus reducing cost. The problem with this arrangement is that the resin may need to be separated from the other media.

A way of ameliorating these problems has been sought.

According to the invention there is provided a water conditioning system for use in the food and/or beverage industry which system comprises
(a) a receptacle for a conditioning media cartridge;
(b) a removable conditioning media cartridge;
wherein the receptacle is provided with an inlet and an outlet such that it can be connected to a water supply.

The receptacle is generally arranged such that, in use, water flowing from the inlet to the outlet is directed to flow through the cartridge.

According to the invention there is also provided a cartridge for use in the water conditioning system according to the invention.

One advantage of the system according to the invention is that the conditioning media cartridge is easily removable because, in use, only the receptacle is connected to the water supply via the inlet and the outlet and so removal of the cartridge does not necessitate disconnection of the inlet and outlet hoses. This is an advantage because the more often the hoses are disconnected and re-connected, the greater the likelihood is of leaks. Therefore a new cartridge can be fitted by the customer. Used cartridges can either be discarded or returned to the manufacturer for recycling.

A further advantage of the system according to the invention is that the receptacle acts as a pressure vessel by protecting the cartridge from atmospheric pressure. Thus the external wall of the cartridge only has to withstand the pressure differential between the water pressure of the inlet and the outlet which is about 50 kPa. In contrast, in the known equivalent systems there is no receptacle to protect the unit from atmospheric pressure and so the vessel wall has to be able to withstand the pressure differential between the water pressure and atmospheric pressure which is about 800 kPa. The commercial need to balance making the container wall able to withstand the pressure drop with an economical construction results in such containers being comparatively small; typically they have a diameter of about 75 mm and a length of about 230mm. However the cartridge of the invention is not subject to such limitations. The cartridge of the invention preferably has a diameter of from 100 to 300 mm, more preferably about 150 mm. It preferably has a length of from 0.4 to 1m.

The system according to the invention may be arranged such that the cartridge is orientated so that, in use, flow of water through the cartridge is substantially vertical or substantially horizontal or at an intermediate angle. The system is preferably arranged such that the flow of water through the cartridge is not substantially horizontal; more preferably the system is arranged such that the flow of water through the cartridge is substantially vertical. This is because when the flow of water is substantially horizontal, there is a greater risk of 'channeling' of water through the cartridge. In other words there is the danger that water will pass through the cartridge without being treated. This is not normally a problem when the flow of water is substantially vertical.

The receptacle is preferably provided with a rinse valve. This is because when a new cartridge is put into the receptacle, it is necessary to rinse it with water to remove media fines. Typically the volume of rinse water required is several times the volume of the cartridge. The advantage of having a rinse valve is that the media fines can be removed from the system without having to disconnect it from the water supply.

The receptacle is preferably provided with a sensor to detect the presence of a cartridge. A potential problem with water conditioning systems is that it is not immediately discernable that the system is working. It may take several months before the effects of a poorly functioning system are revealed by which time it is too late as machinery which heats and uses water produced by the conditioning system will have been damaged by precipitated salts. Usually it is not possible to detect whether a cartridge is present in a water conditioning system without dismantling the system which is clearly inconvenient. This feature of the invention is clearly advantageous as it circumvents all of these problems.

Various different types of sensor may be used to detect the presence of a cartridge in the receptacle. For example, the interior of the receptacle may be provided with a spring-loaded switch which operates when a cartridge is placed inside the receptacle. More preferably the sensor is a proximity sensor which operates without direct contact between the sensor and the cartridge. For example, the receptacle may comprise an optical sensor or, most preferably, the cartridge could be provided with a magnet and the receptacle could comprise a magnetic sensor e.g. a reed switch. A further advantage with the magnet/reed switch arrangement is that it can be designed such that the switch is normally closed but opens to indicate the presence of the cartridge to minimize electrical power consumption. This is because for most of the time a cartridge will be present.

The system according to the invention preferably further includes a resettable water meter which is adapted to connect the receptacle to the water supply. More preferably the water meter is connected to the water supply upstream of the receptacle. The water meter is useful for monitoring the volume of water which has passed through the receptacle. Thus, in use, if the alkalinity of the water is known, the volume of water which can be effectively purified by a cartridge containing dealkalisation resin can be calculated. Thus the meter can be used to determine when the cartridge needs to be replaced, especially if it is reset when a new cartridge is introduced.

The system preferably includes a flow restrictor in or before the inlet to restrict the flow of water from the water supply to a rate at which the conditioning media in the cartridge can treat the water. The flow restrictor preferably defines an orifice through which the water flows wherein the size of the orifice depends upon the water pressure. The flow restrictor more preferably is a resilient deformable ring mounted in a water pipe. The flow restrictor may for example be a rubber ring.

Preferably the system also comprises a display unit in communication with the water meter which display unit indicates when the cartridge needs to be changed. The water meter preferably produces a signal when a set volume of water has passed through it, which signal is transmitted to the display unit. The signal may optionally be transmitted optically or electrically via a cable connecting the water meter to the display unit. Alternatively the signal is optionally a wireless signal and the water meter and the display unit preferably include a wireless signal transmitter and receiver, respectively.

The display unit preferably includes a programmable device which is provided with one or more switches which enable it to be programmed with the number of signals which the display unit must receive before it should indicate that a new cartridge is required. Suitable switches include DIL switches. The programmable device is also preferably provided with an enter switch such that the programmable device can be re-programmed, e.g. with a different number of signals which the display unit must receive before it should indicate that a new cartridge is required.

The display unit preferably includes an illuminated display using an electrical light, LED or LCD display or it may indicate that the cartridge needs to be changed by emitting an audible signal. Preferably the programmable device continues to count the number of signals after it has indicated that a new cartridge is required. This is in order that if it is found that the original number of signals with which the device was programmed to receive was too low, the device can be re-programmed.

Preferably the display unit communicates with the sensor in the receptacle so that the display unit can indicate whether a cartridge is present in the receptacle. The sensor preferably communicates electrically with the display unit via a cable connecting the sensor to the display unit. Alternatively the sensor optionally communicates with the display unit wirelessly such that the sensor includes a wireless signal transmitter and the display unit includes a wireless signal receiver, respectively.

The display unit also preferably indicates when a sufficient volume of rinse water has passed through the receptacle when a new cartridge has been inserted into the receptacle and rinsed out. Preferably the display unit comprises a rinsing warning indicator which activates when the programmable device in the display unit detects from the sensor in the receptacle consecutive signals indicating the absence and then the presence of a cartridge in the receptacle. The programmable device of the display unit is preferably programmed to deactivate the rinsing warning indicator when a preset number of signals has been received from the water meter to show that a sufficient volume of rinse water has passed through the cartridge to remove all of the media fines.

The display unit may also optionally display the amount of life left in the cartridge e.g. by reference to the volume of water. The programmable device of the display unit may also optionally include a timing unit so that the amount of time before the cartridge needs to be changed can be calculated on the basis of average use and displayed.

Where the system according to the invention includes more than one receptacle, the system preferably includes only one display unit such that the display unit is a central display unit and displays the status of all of the receptacles in the system.

Where the medium is a cation and anion exchange resin in the hydrogen and hydroxyl form respectively, for the production of demineralised water the central display unit can take the form of a conductivity measuring device using a conductivity probe in the outlet water connection.

The conductivity measuring device can be powered by either a 240 volt supply or batteries. The 240 volt unit would preferably have red and green lights to indicate water quality. The battery powered unit would preferably have a needle read out with push buttons for water condition and battery status to conserve battery power.

The cartridge preferably includes a medium suitable for producing water for use in the food and/or beverage industry. The medium can consist of any material or combination of materials that are generally used in the treatment of water. These materials include an ion exchange resin (e.g. cation and anion exchange resins of all types), activated carbon, magnesium carbonate/hydroxide granules, manganese dioxide, etc. Preferably the medium includes an ion exchange resin. More preferably the medium includes activated carbon and an ion exchange resin. The activated carbon is optionally impregnated with silver. Most preferably the medium includes from 0 to 30% by volume of activated carbon and from 70 to 100% by volume of dealkalisation resin.

The ion exchange resin is preferably a dealkalisation resin, more preferably it is a weak acid cation exchange resin, for example a polyacrylic copolymer with a carboxylate functional group. Examples of suitable commercially available resins include IMAC HP 333, IMAC HP 336 AND IRC 86 (manufactured by Rohm & Haas); C107E and C104E (manufactured by Purolite); LEWATIT CNPLF (manufactured by Bayer); DOWEX CCR-2 (manufactured by Dow); and RELITE CC and DIAION WK-11 (manufactured by Mitsubishi). Of these, IMAC HP 333, IMAC HP 336, C107E, C104E and LEWATIT CNPLF are the most suitable as they are manufactured to a food grade.

The cartridge preferably includes from 4 to 20 litres of media, more preferably from 6 to 16 litres. The cartridge generally does not include a filter. The cartridge is preferably suitable for treating from 4400 to 22000 litres of water based on a total alkalinity of 100 mg/l measured as CaCO₃, more preferably from 6600 to 17600 litres.

For applications where complete dealkalisation is not needed, e.g. beverage machines for tea, coffee, and/or drinking water, the cartridge preferably includes blending means to allow part of the water supply to bypass the water conditioning media. More preferably the part of the cartridge which engages the inlet is provided with an outlet or the cartridge has a bypass passage through which water can flow without being treated.

Therefore it can be seen that the invention relates to a water conditioning system and cartridges designed to produce treated water for the production of food, beverages and various other processes in sufficient quantities with the required characteristics. Organic pollutants including pesticides can be removed by using various absorbent materials including activated carbon.

The invention will now be illustrated by way of example only with reference to the following drawing:

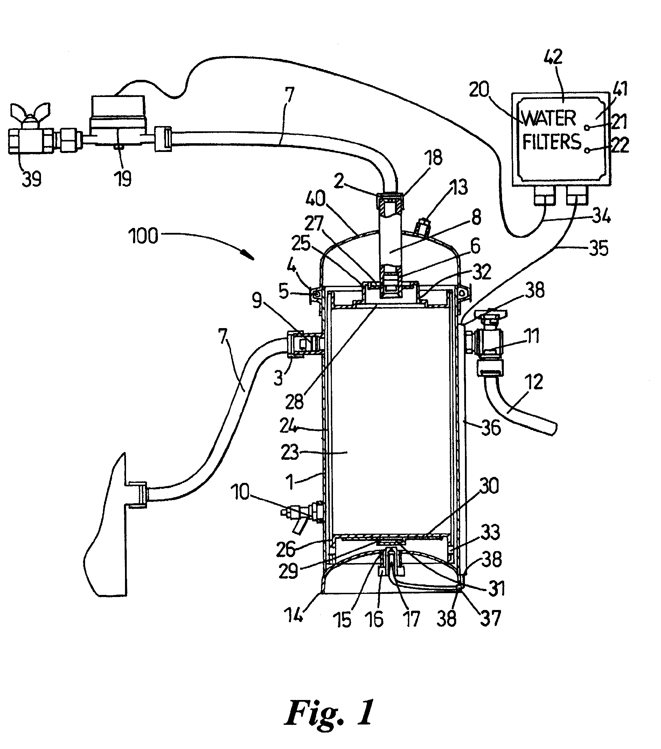

**Figure 1** shows a general layout of the water conditioning system on a typical installation.

The units of the system 100 consist of a pressure vessel 1 made from type 316 stainless steel with inlet connector 2 and outlet connector 3 with parallel male threads for the connection of a standard flexible hose assembly 7.

The vessel is sealed by means of a vee clamp 4 and a nitrile rubber 'O' ring 5.

In order to comply with the current Water Supply (Water Fitting) Regulations 1999, there is a requirement for a single non-return valve upstream of the unit to provide backflow prevention. This valve 6 is located in the inlet pipe 8.

There is also an outlet non-return valve 9 in the outlet pipe to prevent the backflow of water from the system or appliance when the cartridge is exchanged. The pressure vessel also has a drain connection with valve 10 and a rinse connection with valve 11 with detachable hose 12.

The pressure vessel top dished end 40 incorporates an air vent 13 for venting the vessel after the cartridge change.

Located in the pressure vessel bottom dished end 14, is a bottom connector 15 that houses a stainless steel plug 16 in which there is an encapsulated reed switch 17 that is normally closed.

The inlet pipe 8 incorporates a flow restrictor 18 which regulates the water flow to within ± 10% of the design flow at all pressures above 1 bar. This ensures optimum flow conditions for the conditioning medium. The size of the flow restrictor 18 depends on the size of the system and the type of conditioning medium used.

A water meter 19 is located in this arrangement upstream of the conditioning unit and normally connected to the flexible hose assembly 7 which is connected to the inlet pipe 8. The meter has a volume totaliser and also a pulsed output which gives a pulse for a set volume of water passed through the meter, (e.g. 1, 5, 10 litres etc). The pulse rate of the water meter 19 is selected based on water quality, size of unit and conditioning media used. A control box 20 mounted remotely from the conditioning unit is connected to the water meter 19 and the encapsulated reed switch 17, by means of low voltage cables 34,35.

The control box 20 has an IP67 enclosure for operating in high humidity areas, such as kitchens, and incorporates a red flashing indicator light 21 to indicate when the cartridge needs to be changed and an amber low battery light 22 which indicates the requirement for the batteries to be changed.

The control box 20 incorporates a PC board on which there is mounted an integrated circuit which is programmed with relevant instructions to interface with the rest of the system. Also incorporated on the PC board are 3 DIL switches 42 which allow a digital setting of the target count of up to 9990 to be set. The PC board is provided with an enter switch 41 to enable a user of the system to change the target count. The control box is powered by four 1.5V batteries, size C (LR14).

Inputs to the control box 20 are via the water meter cable 34 and reed switch cable 35. Both cables are double insulated. The reed switch cable is protected by a stainless steel conduit 36 running alongside the vessel and through a hole 37 in the side of the bottom dished end 14.

The cable 34 is protected from damage by plastic grommets 38 in the bottom dished end 14 and in the top and bottom of the conduit 36.

The replacement cartridge 23 is manufactured in PVC and has an outer shell 24, top end cap 25 and bottom end cap 26 which are glued together to form an assembly. The top end cap 25 incorporates an EPDM seal 27 glued to the end cap to form a seal with the inlet pipe 8. This is a low pressure seal, as the pressure differential between the inside and outside of the cartridge is only approximately 50 kPa at normal flow conditions. The top end cap 25 also incorporates a stainless steel mesh 28, glued into the end cap to retain the conditioning media. The bottom end cap 26 also incorporates a stainless steel mesh 29 glued into the end cap for resin retention. The bottom end cap incorporates several holes 30 to allow for water collection with a low pressure drop. Alternatively the top end cap 25 and bottom end cap 26 are formed by injection moulding integrally formed with slots or a screen to replace stainless steel mesh 28,29.

Encapsulated in the bottom of the cartridge is a neodenum or other type of magnet 31 to hold the reed switch open when the cartridge is in place.

The reed switch is held open when the cartridge is in the pressure vessel in order to conserve battery power. Alternative methods of indicating that the cartridge is in or out of place can be achieved by various types of sensors or transducers.

To allow water to flow evenly between the vessel and the cartridge, four equal-spaced holes 33 are incorporated into the bottom circumference of the cartridge.

The water conditioning system will normally be supplied as a packaged unit inclusive of pressure vessel 1, inlet and outlet hose 7, rinse hose 12, water meter 19, control box 20 and sufficient cabling 34,35 for the connection of water meter 19 and control box 20. A cartridge 23 for immediate use could either be supplied within the pressure vessel 1, or as a separate item.

A number of spare cartridges would also normally be supplied.

The only item which may optionally be supplied is a positive shut off valve 39 to allow easy cartridge replacement.

The size of water conditioning cartridge supplied would depend on the daily water volume used. The type of cartridge used would depend on influent water quality, the water quality required and the application. All the above parameters would be decided prior to supply.

The water conditioning system would normally be installed on a single appliance such as, proving ovens, steam ovens or a group of appliances. The pipework feeding the appliances may have to be made of a particular material such as PVC, ABS or stainless steel instead of for example, copper or steel which may corrode. For example, a cartridge producing demineralised or dealkalised water could be used.

When the water conditioning cartridge has been installed, it would be necessary to set the volume of water that is required to pass through the water conditioning cartridge before a cartridge change is required on the 3 DIL switches 42 in the control box. This setting would depend on the output pulse rate from the water meter 19. For example, if the water volume required was 26,000 litres and the pulse rate of the water meter was 1 pulse per 10 litres, the setting would be 260.

The decision regarding the actual setting would be made based on the supply water quality, which can be determined either by analysis on site, analysis in a laboratory or by reference to the local water company.

The DIL switch settings can be made with or without a cartridge in place.

Where the supply water quality is known in advance, the DIL switch setting can be set before the unit is despatched. If the pressure vessel does contain the cartridge, the system will be activated when it is electrically connected. If it does not contain the cartridge it will be activated when the cartridge is fitted.

In use, by means of the enter switch 41 on the PC board, the target count may be changed at any time, including when the target has been reached and the indicator light 21 is flashing. To change the target count, the DIL switch setting needs to be changed to the new value and then the enter switch needs to be pressed. If the new target is less than the count already reached, the box reacts as if the target has been reached. If, for some reason, the new target is the same as the previous target, the change is ignored. If the new target is above the current count, the box will continue to the new target before signaling that the cartridge needs to be changed. If the box had reached the old target and indicator light 21 had been switched on, and a new target is set above the current count and the cartridge has not been removed, the box will cancel the cartridge empty display and continue on to the new target.

When fitting the initial or replacement cartridges, it may be necessary to discharge to waste a certain number of media bed volumes of water to remove media fines etc. This is normally 3 media bed volumes.

Whether it is required to discharge to waste a certain number of volumes of water or not will depend on the cartridge media. This may be a requirement to obtain WRAS approval for the water conditioning media and cartridge and/or compliance with the DWI regulations. Where it is necessary, the box is set to measure this quantity of water before the red light goes out after installing a cartridge.

Cartridge replacement is carried out when the red cartridge indicator light on the control box flashes. The water supply is then switched off at the first available moment when the appliance or appliances are not in use. The inlet pipe and flexible hose assembly to pressure vessel 1 and cartridge 23 are then partly drained using valve 10.

When the draining is complete, the valve 10 is closed. The pressure vessel 1 is then opened by removal of vee clamp 4 and the cartridge 23 slowly removed to ensure any excess water drains from the cartridge into the pressure vessel 1.

The new cartridge 23 is carefully placed into the pressure vessel 1 and the top dished end 40 replaced ensuring that the inlet pipe 8 seals inside the EPDM seal 27. The vee clamp 4 is then replaced and tightened, hand tight.

Because the cartridge 23 has been removed, the magnetic field produced by the encapsulated magnet 31 has been broken so the reed switch 17 has closed indicating to the control box 20 that the cartridge 23 has been removed. By replacing the cartridge 23, the reed switch 17 is now held open by the magnet 31, indicating that the new cartridge 23 has been installed.

After connection of temporary hose 12, the water supply is switched on and rinse valve 11, is opened and water discharged to waste via temporary hose 12 until such time as the red light 21 goes out to indicate that the correct quantity of water has been flushed through the cartridge 23.

Rinse valve 11 is then closed and the pressure vessel 1 vented using the air vent 13.

The water conditioning system now stays on line until another replacement cartridge is required.

As a further feature, by setting all of the DIL switches 42 to zero and pressing the enter switch 41, the box 20 is reset to a condition simulating that the cartridge has been replaced, the box 20 will then wait for the three pulses indicating three media bed volumes and the target is set to 1.

The media materials in all cartridges have either WRAS Approval or Approval of the Secretary of State for the Environment via the Drinking Water Inspectorate for use in applications requiring water fit for human consumption (e.g. drinking, food preparation etc). In some applications, there is a requirement to blend water, which is achieved by blend orifice 32 supplied in various sizes.

The control box 20 has an amber low battery light 22 which indicates that the batteries need replacing. Battery replacement can be carried out at any time because the control box has a retentive memory.

The material parts of the water conditioning media and cartridge in contact with the water have been selected based on prior testing by WRAS so that WRAS Approval can easily be obtained.

Other layouts are possible where for instance the water meter would be attached or separate from the unit and also down stream of the unit. Where the cartridges are provided for beverage machines, tea and coffee machines and drinking water applications, there is a requirement not to remove all the calcium and magnesium cations. To achieve this the cartridge has a blend orifice 32 consisting of a hole of 2.0-3mm² on the side of the top end cap 25.

## Claims

1. A water conditioning system for use in the food and/or beverage industry which system comprises
(a) a receptacle for a conditioning media cartridge;
(b) a removable conditioning media cartridge;
wherein the receptacle is provided with an inlet and an outlet such that it can be connected to a water supply.

2. A system according to claim 1 wherein the receptacle is provided with a sensor to detect the presence of a cartridge.

3. A system according to claim 2 wherein the sensor is a proximity sensor which operates without direct contact between the sensor and the cartridge.

4. A system according to any one of the preceding claims wherein in use water flow through the cartridge is not substantially horizontal.

5. A system according to any one of the preceding claims which further comprises a resettable water meter which is adapted to connect the receptacle to the water supply.

6. A system according to claim 5 which also comprises a display unit which communicates with the water meter which display unit indicates when the cartridge needs to be changed.

7. A system according to claim 6 wherein the display unit comprises an illuminated display comprising an electrical light, LED or LCD display.

8. A system according to claim 6 or 7 wherein the display unit indicates the number of litres of water that the cartridge can treat before it needs to be replaced.

9. A system according to any one of claims 6 to 8 wherein the display unit communicates with the sensor in the receptacle such that the display unit indicates whether a cartridge is present in the receptacle.

10. A system according to any one of the preceding claims wherein the cartridge comprises a water conditioning medium suitable for producing water for use in the food and/or beverage industry.

11. A system according to any one of the preceding claims wherein the cartridge comprises a water conditioning medium which comprises activated carbon and a dealkalising resin.

12. A system according to any one of the preceding claims wherein the cartridge comprises from 4 to 20 litres of water conditioning medium, preferably from 6 to 16 litres.

13. A system according to any one of the preceding claims wherein the cartridge is suitable for treating from 4400 to 22000 litres of water, more preferably from 6600 to 17600 litres.

14. A conditioning media cartridge for use in the water conditioning system according to any one of the preceding claims.

15. A conditioning media cartridge according to claim 14 as defined in any one of claims 10 to 13.

16. A conditioning media cartridge according to claim 14 or claim 15 which comprises a magnet.
